(19) Europäisches Patentamt
European Patent Office
Office européen des brevets

(11) **EP 3 739 273 A1**

(12) **DEMANDE DE BREVET EUROPEEN**

(43) Date de publication:
**18.11.2020 Bulletin 2020/47**

(21) Numéro de dépôt: **20174020.6**

(22) Date de dépôt: **12.05.2020**

(51) Int Cl.:
**F24F 11/33** *(2018.01)* **F24F 11/34** *(2018.01)*
**F24F 12/00** *(2006.01)* **F24F 11/81** *(2018.01)*
**F24F 110/10** *(2018.01)* **F24F 110/12** *(2018.01)*

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **13.05.2019 FR 1904946**

(71) Demandeur: **Atlantic Climatisation et Ventilation 69330 Meyzieu (FR)**

(72) Inventeurs:
• **GAUDILLOT, Axel 38500 Voiron (FR)**
• **GUENETON, Nicolas 42800 Saint-Joseph (FR)**

(74) Mandataire: **Plasseraud IP 66, rue de la Chaussée d'Antin 75440 Paris Cedex 09 (FR)**

(54) **SYSTEME DE VENTILATION D'UN LOCAL**

(57) L'invention concerne un système (1) de ventilation d'un local, comprenant un caisson comportant un ventilateur d'insufflation d'un flux d'air neuf, et un ventilation d'extraction d'un flux d'air vicié, un échangeur de chaleur d'échange thermique entre le flux d'air neuf et le flux d'air vicié et un canal de contournement (13) de l'échangeur de chaleur, le système de ventilation (1) comprenant un dispositif d'obturation pour répartir le flux d'air neuf entre l'échangeur de chaleur (E) et le canal (13), le dispositif (14) étant monté mobile pour occuper une pluralité de positions, et le système (1) étant configuré pour que, lorsqu'une température mesurée en sortie d'air neuf est supérieure ou égale à une valeur seuil, le dispositif (14) occupe une position, de sorte qu'une température mesurée en sortie d'air neuf soit inférieure ou égale à une température égale à une somme d'une température en entrée d'air neuf et d'une valeur de 180°C.

[Fig. 1]

FIG. 1

# Description

## Domaine technique

L'invention se rapporte à un système de ventilation d'un local, tel qu'un bâtiment, connu sous l'appellation « double flux ».

## Technique antérieure

Un tel système de ventilation à double flux comprend généralement un caisson comportant un ventilateur d'insufflation d'un flux d'air issu d'un extérieur au local à destination du local, dit flux d'air neuf, et un ventilation d'extraction d'un flux d'air issu du local à destination de l'extérieur, dit flux d'air vicié, le caisson étant muni d'une entrée du flux d'air neuf dans le caisson et d'une sortie du flux d'air neuf hors du caisson, le caisson étant également muni d'une entrée d'air du flux d'air vicié dans le caisson et d'une sortie du flux d'air vicié hors du caisson.

Le système de ventilation comprend en particulier un échangeur de chaleur d'échange thermique entre le flux d'air neuf et le flux d'air vicié, afin de traiter thermiquement le flux d'air neuf avant qu'il pénètre dans le local, ce qui permet notamment de préchauffer le flux d'air neuf en hiver et de le refroidir en été.

Néanmoins, un tel système connu présente l'inconvénient de devoir subir de lourdes modifications pour pouvoir fonctionner en cas d'incendie au moins pendant trente minutes, afin d'assurer au mieux la sécurité des occupants du local, ce qui engendre des complications et un surcoût du procédé de fabrication, ainsi qu'un encombrement supplémentaire et un fonctionnement en mode normal non optimisé du fait des modifications apportées.

Le but de l'invention est de remédier à ces inconvénients.

## Résumé

A cet effet, l'invention a pour objet un système de ventilation d'un local, tel qu'un bâtiment, comprenant un caisson comportant un ventilateur d'insufflation d'un flux d'air issu d'un extérieur au local à destination du local, dit flux d'air neuf, et un ventilation d'extraction d'un flux d'air issu du local à destination de l'extérieur, dit flux d'air vicié, le caisson étant muni d'une entrée du flux d'air neuf dans le caisson et d'une sortie du flux d'air neuf hors du caisson, le caisson étant également muni d'une entrée d'air du flux d'air vicié dans le caisson et d'une sortie du flux d'air vicié hors du caisson, le système de ventilation comprenant un échangeur de chaleur d'échange thermique entre le flux d'air neuf et le flux d'air vicié et un canal de contournement de l'échangeur de chaleur conformé pour qu'une partie au moins du flux d'air neuf ne traverse pas l'échangeur de chaleur, le système de ventilation comprenant un dispositif d'obturation pour répartir le flux d'air neuf entre l'échangeur de chaleur et le canal de contournement, le dispositif d'obturation étant monté mobile pour occuper une pluralité de positions, caractérisé en ce que le système est configuré pour que, lorsqu'une température d'air est supérieure ou égale à une valeur seuil, le dispositif d'obturation occupe une position, dite position en mode feu, de sorte qu'une température d'air en sortie d'air neuf soit inférieure ou égale à une température égale à une somme d'une température en entrée d'air neuf et d'une valeur de 180°C.

Ainsi, le système selon la présente invention continue de ventiler en cas d'incendie, au moins pendant trente minutes, tout en assurant un fonctionnement en mode normal optimisé et un encombrement réduit, puisqu'il n'est pas nécessaire de prévoir de moyens de refroidissement supplémentaires.

Selon un autre aspect, le dispositif d'obturation est monté mobile entre deux positions dites positions extrémales, une position d'obturation complète de l'échangeur de chaleur dans laquelle aucun air neuf ne traverse l'échangeur de chaleur et une position d'obturation complète du canal de contournement dans lequel aucun air neuf ne traverse le canal de contournement.

Selon un autre aspect, le dispositif d'obturation est un volet monté pivotant selon un angle d'ouverture du canal de contournement entre lesdites positions extrémales.

Selon un autre aspect, le dispositif d'obturation est configuré pour se positionner dans une position telle qu'une différence en valeur absolue entre une température dans la sortie d'air vicié et la température en sortie d'air neuf soit inférieure ou égale à 150°C.

Selon un autre aspect, la température seuil est comprise entre 60°C et 425°C

Selon un autre aspect, le ventilateur d'insufflation et le ventilateur d'extraction sont installés de sorte à être respectivement dans le flux d'air neuf et dans le flux d'air vicié quand le système est en fonctionnement, y compris en mode feu.

L'invention a également pour objet un procédé de régulation d'un système de ventilation d'un local, tel qu'un bâtiment, le système comprenant un caisson comportant un ventilateur d'insufflation d'un flux d'air issu d'un extérieur au local à destination du local, dit flux d'air neuf, et un ventilation d'extraction d'un flux d'air issu du local à destination de l'extérieur, dit flux d'air vicié, le caisson étant muni d'une entrée du flux d'air neuf dans le caisson et d'une sortie du flux d'air neuf hors du caisson, le caisson étant également muni d'une entrée d'air du flux d'air vicié dans le caisson et d'une sortie du flux d'air vicié hors du caisson, le système de ventilation comprenant un échangeur de chaleur d'échange thermique entre le flux d'air neuf et le flux d'air vicié et un canal de contournement de l'échangeur de chaleur conformé pour qu'une partie au moins du flux d'air neuf ne traverse pas l'échangeur de chaleur, le système de ventilation comprenant un dispositif d'obturation pour répartir le flux d'air neuf entre l'échangeur de chaleur et le canal de contournement, le dispositif d'obturation étant monté mobile pour occuper une pluralité de positions, le procédé étant caractérisé en ce qu'il comprend une étape de déclenchement d'un mode dit mode feu lorsqu'une température d'air est supérieure ou égale à une valeur seuil, l'étape de déclenchement comprenant une étape de positionnement du dispositif d'obturation dans une position, dite position en mode feu, de sorte qu'une température mesurée en sortie d'air neuf soit inférieure ou égale à une température égale à une somme d'une température en entrée d'air neuf et d'une valeur de 180°C.

Selon un autre aspect, le procédé comprend une étape de positionnement du dispositif d'obturation dans une position telle que qu'une différence en valeur absolue entre une température dans la sortie d'air vicié et la température en sortie d'air neuf soit inférieure ou égale à 150°C.

L'invention a également pour objet un système de ventilation d'un local, tel qu'un bâtiment, comprenant un caisson comportant un ventilateur d'insufflation d'un flux d'air issu d'un extérieur au local à destination du local, dit flux d'air neuf, et un ventilation d'extraction d'un flux d'air issu du local à destination de l'extérieur, dit flux d'air vicié, le caisson étant muni d'une entrée du flux d'air neuf dans le caisson et d'une sortie du flux d'air neuf hors du caisson, le caisson étant également muni d'une entrée d'air du flux d'air vicié dans le caisson et d'une sortie du flux d'air vicié hors du caisson, le système de ventilation comprenant un échangeur de chaleur d'échange thermique entre le flux d'air neuf et le flux d'air vicié et un canal de contournement de l'échangeur de chaleur conformé pour qu'une partie au moins du flux d'air neuf ne traverse pas l'échangeur de chaleur, le système de ventilation comprenant un dispositif d'obturation pour répartir le flux d'air neuf entre l'échangeur de chaleur et le canal de contournement, le dispositif d'obturation étant monté mobile pour occuper une pluralité de positions, et le système étant caractérisé en ce qu'il est configuré pour que, à chaque mesure de température, le dispositif d'obturation occupe une position telle qu'une température en sortie d'air neuf soit inférieure ou égale à une température égale à une somme d'une température en entrée d'air neuf et d'une valeur de 180°C et que la température d'air en sortie d'air neuf soit égale à une température d'air en sortie d'air vicié tant que la température en sortie d'air neuf est inférieure ou égale à une température égale à ladite somme d'une température en entrée d'air neuf et d'une valeur de 180°C.

L'invention a également pour objet un procédé de régulation d'un système de ventilation d'un local, tel qu'un bâtiment, le système comprenant un caisson comportant un ventilateur d'insufflation d'un flux d'air issu d'un extérieur au local à destination du local, dit flux d'air neuf, et un ventilation d'extraction d'un flux d'air issu du local à destination de l'extérieur, dit flux d'air vicié, le caisson étant muni d'une entrée du flux d'air neuf dans le caisson et d'une sortie du flux d'air neuf hors du caisson, le caisson étant également muni d'une entrée d'air du flux d'air vicié dans le caisson et d'une sortie du flux d'air vicié hors du caisson, le système de ventilation comprenant un échangeur de chaleur d'échange thermique entre le flux d'air neuf et le flux d'air vicié et un canal de contournement de l'échangeur de chaleur conformé pour qu'une partie au moins du flux d'air neuf ne traverse pas l'échangeur de chaleur, le système de ventilation comprenant un dispositif d'obturation pour répartir le flux d'air neuf entre l'échangeur de chaleur et le canal de contournement, le dispositif d'obturation étant monté mobile pour occuper une pluralité de positions, le procédé comprenant :

- une étape de déclenchement d'un mode dit mode feu lorsqu'une température d'air est supérieure ou égale à une valeur seuil, puis
- une étape de mesure à des instants donnés de la température d'air en sortie d'air neuf et en sortie d'air vicié, et en entrée d'air neuf, et
- pour chaque mesure, une étape de positionnement du dispositif d'obturation à chaque mesure de température, le dispositif d'obturation occupe une position telle qu'une température en sortie d'air neuf soit inférieure ou égale à une température égale à une somme d'une température en entrée d'air neuf et d'une valeur de 180°C et que la température d'air en sortie d'air neuf soit égale à une température d'air en sortie d'air vicié tant que la température en sortie d'air neuf est inférieure ou égale à une température égale à ladite somme d'une température en entrée d'air neuf et d'une valeur de 180°C.

**Brève description des dessins**

D'autres caractéristiques, détails et avantages de l'invention apparaîtront encore à la lecture de la description qui va suivre. Celle-ci est purement illustrative et doit être lue en regard des dessins annexés sur lesquels :

**Fig. 1**

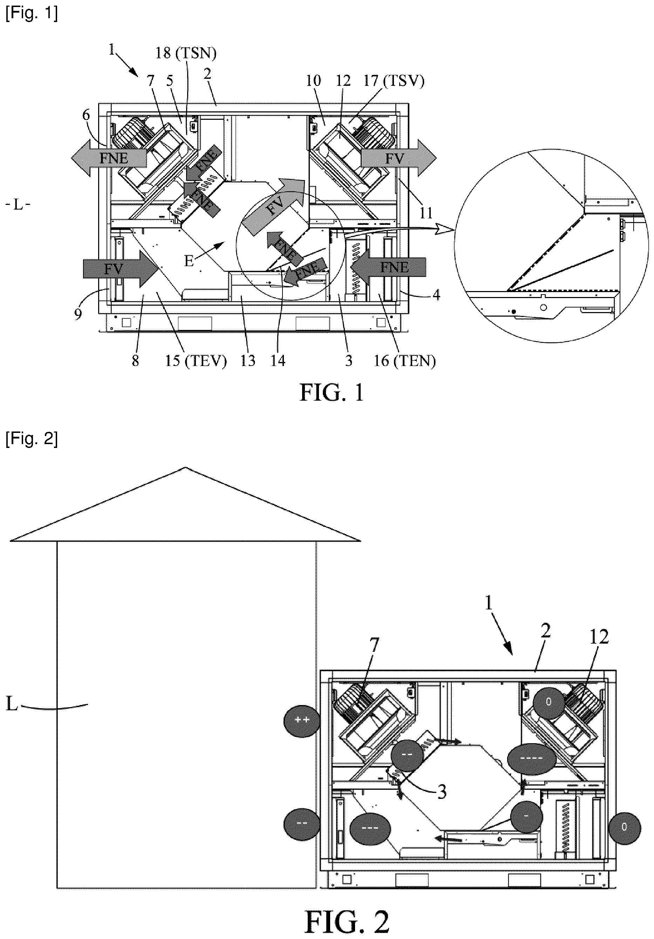

[Fig. 1] illustre une vue en coupe longitudinale d'un dispositif de ventilation selon la présente invention.

**Fig. 2**
[Fig. 2] illustre une vue en coupe longitudinale du dispositif de la figure 1, avec indication de niveaux de surpression/dépression.

**Fig. 3**

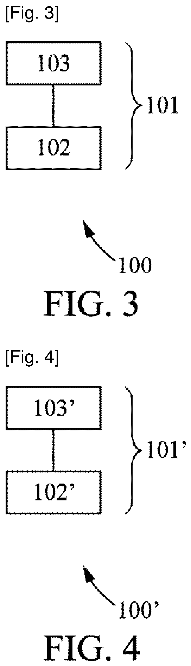

[Fig. 3] illustre un ordinogramme des étapes d'un procédé de fonctionnement du dispositif de la figure 1 selon un premier mode de réalisation.

**Fig. 4**
[Fig. 4] illustre un ordinogramme des étapes d'un procédé de fonctionnement du dispositif de la figure 1 selon un deuxième mode de réalisation.

## Description des modes de réalisation

La présente invention a pour objet un système de ventilation, référencé 1 sur les figures 1 et 2, pour ventiler un local L, selon deux modes de réalisation. Par local, on entend toute pièce ou ensemble de pièces d'un bâtiment individuel ou collectif.

L'invention a également pour objet un procédé de régulation des flux d'air circulant dans le système de ventilation 1, selon deux modes de réalisation, et référencé 100 et 100' sur les figures 3 et 4.

Comme visible sur les figures 1 et 2, le système de ventilation 1 comprend un caisson 2 muni de plusieurs compartiments et d'un échangeur de chaleur E.

Un premier compartiment 3 comprend une entrée 4 d'un flux d'air issu d'un extérieur au local L à destination du local, dit flux d'air neuf, FNE. Le premier compartiment 3 est disposé en amont de l'échangeur de chaleur E relativement au flux d'air neuf FNE.

Un deuxième compartiment 5 comprend une sortie 6 du flux d'air neuf FNE hors du caisson 2, par laquelle le flux d'air neuf pénètre dans le local L. A l'intérieur du deuxième compartiment 5 est installé un ventilateur 7 d'insufflation du flux d'air neuf FNE. Le deuxième compartiment 5 est disposé en aval de l'échangeur de chaleur E relativement au flux d'air neuf FNE.

Un troisième compartiment 8 comprend une entrée 9 d'un flux d'air issu du local à destination de l'extérieur, dit flux d'air vicié FV, par lequel le flux d'air vicié FV quitte le local L. Le troisième compartiment 8 est disposé en amont de l'échangeur de chaleur E relativement au flux d'air vicié FV.

Un quatrième compartiment 10 comprend une sortie 11 du flux d'air vicié FV hors du caisson 2. A l'intérieur du quatrième compartiment 10 est installé un ventilateur 12 d'extraction du flux d'air vicié FV. Le quatrième compartiment 10 est disposé en aval de l'échangeur de chaleur E relativement au flux d'air vicié FV.

Comme il ressort des figures 1 et 2, l'échangeur de chaleur E assure un échange thermique entre le flux d'air neuf FNE et le flux d'air vicié FV. En d'autres termes, l'échangeur E transfère les calories d'un flux vers l'autre de telle sorte que les calories contenues dans le flux d'air vicié FV soient transférées dans le flux d'air neuf FNE et injectées dans le local L, avant son entrée dans le local L. Le système de ventilation 1 est de ce fait un système double flux.

Comme également visible sur les figures 1 et 2, le système 1 comprend un canal 13 de contournement de l'échangeur de chaleur E ainsi qu'un volet 14 monté mobile entre deux positions extrémales, une position d'obturation complète de l'échangeur de chaleur 3 (en traits mixtes sur la figure 1) et une position d'obturation complète du canal de contournement 13 (en pointillés sur la figure 1). Ainsi, le volet 14 peut occuper l'une des deux positions extrémales, et une pluralité de positions intermédiaires entre les deux positions extrémales.

Le système 1 comprend aussi un moyen de commande du volet, tel qu'un actionneur ou un moteur pas à pas, alimenté par un signal électrique. Un pourcentage du signal de commande correspond à un angle d'ouverture du volet, lui-même correspondant à un pourcentage de débit de contournement 13.

Selon le premier mode de réalisation, le système 1 comprend au moins un dispositif pour connaître directement ou indirectement une température d'air reflétant la température d'air extraite du local L, telle qu'une sonde de température ou un élément d'information de dépassement de température, par exemple un thermocontact, tel qu'un bilame pourrait faire l'affaire. Dans la présente demande, on parle plus généralement de mesure de température, qu'il faut comprendre au sens large, c'est-à-dire un dispositif qui mesure effectivement la température ou qui indique un dépassement de la température seuil.

Avantageusement, le dispositif, référencé 15, est disposé dans le troisième compartiment 8 ou à proximité de celui-ci, en amont de l'échangeur de chaleur E, ce qui permet de déterminer la température d'air en entrée d'air vicié d'air TEV. En variante, le dispositif, référencé alors 18, est disposé dans le deuxième compartiment 5 ou à proximité de celui-ci, ce qui permet de déterminer la température d'air en sortie d'air neuf TSN (sachant qu'en cas d'incendie, le rendement de l'échangeur de chaleur E est de 100%).

Comme indiqué ci-dessus, le dispositif 15, 18 peut ne pas être dans le compartiment mais à proximité et fournir une information exploitable et indirecte. Par exemple, le dispositif peut être disposé à l'extérieur du compartiment en exploitant le rayonnement d'une tôle d'enveloppe.

Le dispositif 1 peut comprendre un capteur 16 d'air en entrée d'air neuf pour mesurer TEN, ce capteur n'étant cependant pas nécessaire quand le mode feu a été calibré. De préférence, on prévoit que la température TEN est comprise entre -20°C et 40°C (le pire cas étant -20°C).

Le système 1 est configuré pour que, lorsque la température TEV ou la température TSN, comme expliqué ci-avant, est supérieure ou égale à une valeur seuil, le volet 14 occupe une position spécifique, dite position en mode feu, afin d'assurer que la température TSN soit inférieure ou égale à une température égale à une somme de la température en entrée d'air neuf TEN et d'une valeur de 180°C, c'est-à-dire de respecter la condition suivante :

$$TSN \leq TEN + 180.$$

Avantageusement, la position en mode feu a été prédéterminée.

Par exemple, des simulations ont montré qu'un taux d'ouverture de 30% pour un dispositif de ventilation 1 de 1500 m$^3$/h du canal de contournement 13 permet d'assurer la condition de température ci-dessus. Dans ce cas, quand le mode feu est déclenché, le taux d'ouverture de 30% est appliqué au volet 14.

La température seuil de déclenchement du mode feu est avantageusement comprise entre 60°C et 425°C, selon la position du dispositif 15, 18 et sa nature (sonde de température ou bilame notamment) par exemple 92°C.

Avantageusement, le système 1 est configuré pour qu'une différence en valeur absolue entre les températures d'air dans les deuxième et quatrième compartiments 5 et 10 contenant les ventilateurs ne soit pas supérieure à 150°C, avantageusement à 100°C, de préférence à 50°C, afin d'assurer un fonctionnement optimisé du caisson, même en cas d'incendie.

Ainsi, grâce à la position en mode feu du volet 14, le système 1 peut continuer de fonctionner pendant une durée d'au moins trente minutes, tout en assurant de ne pas perdre plus de 10% de débit nominal d'extraction du flux d'air vicié FV, 20% de débit nominal d'insufflation du flux d'air neuf FNE.

Le système est avantageusement configuré pour que, lorsque le mode feu est déclenché, les ventilateurs d'insufflation et d'extraction fonctionnent en vitesse maximale.

On note que le ventilateur d'insufflation et le ventilateur d'extraction sont installés respectivement dans le flux d'air neuf et dans le flux d'air vicié, y compris en mode feu.

Ainsi, le système 1 n'est pas plus encombrant qu'un système de l'art antérieur, tout en assurant un fonctionnement en cas d'incendie. Du fait que les ventilateurs sont constamment dans leur flux d'air respectif, leur fonctionnement est optimisé pendant un mode normal, c'est-à-dire quand la température TEV reste inférieure à la valeur seuil, ce qui assure une plus grande durée de vie du système 1. On note également que le système 1 est dépourvu de moyen de refroidissement dédié aux ventilateurs d'insufflation et d'extraction.

L'invention a également pour objet le procédé 100 de régulation des flux d'air FNE et FV.

Comme visible sur la figure 3, le procédé 100 comprend une étape 101 de déclenchement du mode feu lorsque la température TEV est supérieure ou égale à la valeur seuil.

L'étape de déclenchement 101 comprend une étape 102 de positionnement du volet 14 dans la position en mode feu déjà décrite.

Avantageusement, le positionnement du volet tient compte des températures des deuxième et quatrième compartiments 5 et 10, comme déjà décrits.

De préférence, l'étape de déclenchement 101 comprend également une étape 103 de mise en fonctionnement de chacun des ventilateurs 7 et 12 en vitesse maximale.

Le système selon le premier mode de réalisation et le procédé associé présentent l'avantage d'être peu coûteux dans la mesure où la calibration du mode feu est effectuée une fois pour toutes.

Selon une variante non illustrée, si l'on dispose d'un capteur de température de la température d'air en sortie d'air neuf, on peut prévoir une boucle de régulation pour satisfaire la condition :

$$TSN \leq TEN + 180.$$

Avantageusement, TEN est fixée entre -20°C et 40°C (le pire cas étant - 20°C).

Avantageusement, on calibre la différence des températures TSN et TSV pour être inférieure à 150°C, avantageusement inférieure à 100°C, de préférence inférieure à 50°C.

Cette variante présente l'avantage de ne pas nécessiter de préparation du système et du procédé associé en mode feu par calibration.

Selon le deuxième mode de réalisation, le système 1 est équipé d'un capteur 17 de la température d'air dans la sortie d'air vicié TSV et du capteur 18 de la température d'air dans la sortie d'air neuf TSN.

Le système 1 est configuré pour comparer les deux températures TSN et TSV et déclencher le mode feu quand la température TSN ou TEV est supérieure à une température seuil comprise entre 60°C et 425°C, par exemple 92°C, comme déjà décrit en relation avec le premier mode de réalisation. Le volet 14 est alors positionné en mode feu pour rééquilibrer lesdites températures TSN et TSV. En d'autres termes, à chaque mesure des températures, l'angle d'ouverture est éventuellement modifié pour satisfaire les conditions de température telles que :

$$TSN = TSV \text{ si est seulement si}$$

$$TSN \leq TEN + 180.$$

Pour des raisons de coût, il est souhaitable de n'avoir que deux capteurs de température, à savoir les capteurs 17 et 18 et de considérer que la température en entrée d'air neuf TEN est comprise entre -20°C et + 40°C. Le capteur 16 n'est pas nécessaire dans le cas là. La température de -20°C étant plus pénalisante, elle implique donc les conditions suivantes :

$$TSN = TSV \text{ si est seulement si}$$

$$TSN \leq 160.$$

La régulation selon ce deuxième mode de réalisation est avantageuse quand la position en mode feu ne peut pas être prédéterminée, par manque de matériel adéquat pour faire une calibration par exemple, et permet également d'équilibrer les températures au niveau des moteurs, ce qui réduit leur température en mode feu et augmente de ce fait leur durée de vie.

Comme pour le premier mode de réalisation, le système est avantageusement configuré pour que, lorsque le mode feu est déclenché, les ventilateurs d'insufflation et d'extraction fonctionnent en vitesse maximale.

La température seuil de déclenchement du mode feu est avantageusement comprise entre 60°C et 425°C, par exemple 92°C.

On note que le ventilateur d'insufflation et le ventilateur d'extraction sont installés respectivement dans le flux d'air neuf et dans le flux d'air vicié, y compris en mode feu.

Le procédé associé 100' de régulation des flux d'air FNE et FV comprend une étape de déclenchement 101' du mode feu lorsque la température mesurée en entrée d'air vicié TEV est supérieure ou égale à la valeur seuil, et une étape 102' de positionnement du volet 14 en mode feu selon la position adéquate pour satisfaire les conditions de température notées ci-avant, comme déjà expliqué.

Avantageusement, le procédé 100' comprend également une étape 103' de mise en fonctionnement de chacun des ventilateurs 7 et 12 en vitesse maximale, comme déjà décrit en relation avec le premier mode de réalisation.

Sur la figure 2, qui s'applique à chacun des deux modes de réalisation, sont illustrées les niveaux de surpressions (+) et de dépressions (-) existant dans chacun des compartiments 3, 5, 8 et 10 et dues aux ventilateurs ainsi qu'aux éléments (filtres, conduits ...) traversés par l'air dans le caisson 2 et dans le local L.

Comme on le constate sur cette figure, le flux d'air vicié FV pénètre dans le caisson 2 par l'entrée d'air vicié 9 et y circule jusqu'à la sortie 11 sans risque de recirculation dans le flux d'air neuf FNE, ce qui assure que les fumées issues du local L en cas d'incendie sont efficacement évacuées hors du local via le caisson 2.

Selon le nombre de sondes de température (aucun ou un capteur de TSN ou deux capteurs pour mesurer TSN et TSV, ou trois capteurs TSN, TSV et TEN, ou quatre capteurs TSN, TSV, TEN et TEV), il est possible de prévoir différentes boucles de régulation en mode feu.

**Revendications**

1. Système de ventilation d'un local, tel qu'un bâtiment, comprenant un caisson (2) comportant un ventilateur d'insufflation (7) d'un flux d'air issu d'un extérieur au local à destination du local, dit flux d'air neuf (FNE), et un ventilation d'extraction (12) d'un flux d'air issu du local à destination de l'extérieur, dit flux d'air vicié (FV), le caisson (2) étant muni d'une entrée du flux d'air neuf (4) dans le caisson (2) et d'une sortie du flux d'air neuf (6) hors du caisson (2), le caisson (2) étant également muni d'une entrée d'air du flux d'air vicié (9) dans le caisson (2) et d'une sortie du flux d'air vicié (11) hors du caisson (2), le système de ventilation (1) comprenant un échangeur de chaleur d'échange thermique (E) entre le flux d'air neuf (FNE) et le flux d'air vicié (FV) et un canal de contournement (13) de l'échangeur de chaleur conformé pour qu'une partie au moins du flux d'air neuf ne traverse pas l'échangeur de chaleur, le système de ventilation (1) comprenant un dispositif d'obturation (14) pour répartir le flux d'air neuf entre l'échangeur de chaleur et le canal de contournement, le dispositif d'obturation (14) étant monté mobile pour occuper une pluralité de positions, **caractérisé en ce que** le système est configuré pour que, lorsqu'une température d'air est supérieure ou égale à une valeur seuil, le dispositif d'obturation occupe une position, dite position en mode feu, de sorte qu'une température d'air en sortie d'air neuf soit inférieure ou égale à une température égale à une somme d'une température en entrée d'air neuf (TEN) et d'une valeur de 180°C.

2. Système selon la revendication 1, dans lequel le dispositif d'obturation est monté mobile entre deux positions dites positions extrémales, une position d'obturation complète de l'échangeur de chaleur dans laquelle aucun air neuf ne traverse l'échangeur de chaleur et une position d'obturation complète du canal de contournement dans lequel aucun air neuf ne traverse le canal de contournement.

3. Système selon la revendication précédente, dans lequel le dispositif d'obturation (14) est un volet monté pivotant selon un angle d'ouverture du canal de contournement entre lesdites positions extrémales.

4. Système selon l'une des revendications précédentes, le dispositif d'obturation (14) étant configuré pour se positionner dans une position telle qu'une différence en valeur absolue entre une température dans la sortie d'air vicié et la température en sortie d'air neuf soit inférieure ou égale à 150°C.

5. Système selon l'une des revendications précédentes, dans lequel la température seuil est comprise entre 60°C et 425°C.

6. Système selon l'une des revendications précédentes, dans lequel le ventilateur d'insufflation (7) et le ventilateur d'extraction (12) sont installés de sorte à être respectivement dans le flux d'air neuf et dans le flux d'air vicié quand le système est en fonctionnement, y compris en mode feu.

7. Procédé de régulation d'un système de ventilation d'un local, tel qu'un bâtiment, le système comprenant un caisson (2) comportant un ventilateur d'insufflation (7) d'un flux d'air issu d'un extérieur au local à destination du local, dit flux d'air neuf (FNE), et un ventilation d'extraction (12) d'un flux d'air issu du local à destination de l'extérieur, dit flux d'air vicié (FV), le caisson (2) étant muni d'une entrée du flux d'air neuf (4) dans le caisson (2) et d'une sortie du flux d'air neuf (6) hors du caisson (2), le caisson (2) étant également muni d'une entrée d'air du flux d'air vicié (9) dans le caisson (2) et d'une sortie du flux d'air vicié (11) hors du caisson (2), le système de ventilation (1) comprenant un échangeur de chaleur (E) d'échange thermique entre le flux d'air neuf (FNE) et le flux d'air vicié (FV) et un canal de contournement de l'échangeur de chaleur (13) conformé pour qu'une partie au moins du flux d'air neuf ne traverse pas l'échangeur de chaleur, le système de ventilation comprenant un dispositif d'obturation (14) pour répartir le flux d'air neuf entre l'échangeur de chaleur et le canal de contournement, le dispositif d'obturation (14) étant monté mobile pour occuper une pluralité de positions, le procédé étant **caractérisé en ce qu'**il comprend une étape de déclenchement d'un mode dit mode feu lorsqu'une température d'air est supérieure ou égale à une valeur seuil, l'étape de déclenchement comprenant une étape de positionnement du dispositif d'obturation dans une position, dite position en mode feu, de sorte qu'une température mesurée en sortie d'air neuf soit inférieure ou égale à une température égale à une somme d'une température en entrée d'air neuf et d'une valeur de 180°C.

**8.** Procédé selon la revendication précédente, comprenant une étape de positionnement du dispositif d'obturation (14) dans une position telle que qu'une différence en valeur absolue entre une température dans la sortie d'air vicié et la température en sortie d'air neuf soit inférieure ou égale à 150°C.

**9.** Système de ventilation d'un local, tel qu'un bâtiment, comprenant un caisson (2) comportant un ventilateur d'insufflation (7) d'un flux d'air issu d'un extérieur au local à destination du local, dit flux d'air neuf (FNE), et un ventilation d'extraction (12) d'un flux d'air issu du local à destination de l'extérieur, dit flux d'air vicié (FV), le caisson (2) étant muni d'une entrée du flux d'air neuf (4) dans le caisson (2) et d'une sortie du flux d'air neuf (6) hors du caisson (2), le caisson (2) étant également muni d'une entrée d'air du flux d'air vicié (9) dans le caisson (2) et d'une sortie du flux d'air vicié (11) hors du caisson (2), le système de ventilation (1) comprenant un échangeur de chaleur (E) d'échange thermique entre le flux d'air neuf (FNE) et le flux d'air vicié (FV) et un canal de contournement (13) de l'échangeur de chaleur conformé pour qu'une partie au moins du flux d'air neuf ne traverse pas l'échangeur de chaleur, le système de ventilation comprenant un dispositif d'obturation (14) pour répartir le flux d'air neuf entre l'échangeur de chaleur et le canal de contournement, le dispositif d'obturation étant monté mobile pour occuper une pluralité de positions, et le système étant **caractérisé en ce qu'**il est configuré pour que, à chaque mesure de température, le dispositif d'obturation occupe une position telle qu'une température en sortie d'air neuf (TSN) soit inférieure ou égale à une température égale à une somme d'une température en entrée d'air neuf (TEN) et d'une valeur de 180°C et que la température d'air en sortie d'air neuf (TSN) soit égale à une température d'air en sortie d'air vicié (TSV) tant que la température en sortie d'air neuf (TSN) est inférieure ou égale à une température égale à ladite somme d'une température en entrée d'air neuf (TEN) et d'une valeur de 180°C.

**10.** Procédé de régulation d'un système de ventilation d'un local, tel qu'un bâtiment, le système comprenant un caisson comportant un ventilateur d'insufflation d'un flux d'air issu d'un extérieur au local à destination du local, dit flux d'air neuf, et un ventilation d'extraction d'un flux d'air issu du local à destination de l'extérieur, dit flux d'air vicié, le caisson étant muni d'une entrée du flux d'air neuf dans le caisson et d'une sortie du flux d'air neuf hors du caisson, le caisson étant également muni d'une entrée d'air du flux d'air vicié dans le caisson et d'une sortie du flux d'air vicié hors du caisson, le système de ventilation comprenant un échangeur de chaleur d'échange thermique entre le flux d'air neuf et le flux d'air vicié et un canal de contournement de l'échangeur de chaleur conformé pour qu'une partie au moins du flux d'air neuf ne traverse pas l'échangeur de chaleur, le système de ventilation comprenant un dispositif d'obturation pour répartir le flux d'air neuf entre l'échangeur de chaleur et le canal de contournement, le dispositif d'obturation étant monté mobile pour occuper une pluralité de positions, le procédé comprenant :

- une étape de déclenchement d'un mode dit mode feu lorsqu'une température d'air est supérieure ou égale à une valeur seuil, puis
- une étape de mesure à des instants donnés de la température d'air en sortie d'air neuf et en sortie d'air vicié, et en entrée d'air neuf, et
- pour chaque mesure, une étape de positionnement du dispositif d'obturation à chaque mesure de température, le dispositif d'obturation occupe une position telle qu'une température en sortie d'air neuf (TSN) soit inférieure ou égale à une température égale à une somme d'une température en entrée d'air neuf (TEN) et d'une valeur de 180°C et que la température d'air en sortie d'air neuf (TSN) soit égale à une température d'air en sortie d'air vicié (TSV) tant que la température en sortie d'air neuf (TSN) est inférieure ou égale à une température égale à ladite somme d'une température en entrée d'air neuf (TEN) et d'une valeur de 180°C.

[Fig. 1]

FIG. 1

[Fig. 2]

FIG. 2

[Fig. 3]

FIG. 3

[Fig. 4]

FIG. 4

Europäisches Patentamt
European Patent Office
Office européen des brevets

**RAPPORT DE RECHERCHE EUROPEENNE**

Numéro de la demande

EP 20 17 4020

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 0 928 932 A1 (STORK J E VENTILATOREN BV [NL]) 14 juillet 1999 (1999-07-14) * le document en entier * | 1-10 | INV. F24F11/33 F24F11/34 F24F12/00 |
| A | FR 3 033 627 A1 (FRANCE AIR [FR]) 16 septembre 2016 (2016-09-16) * pages 3-5; figures 1-3 * | 1-10 | F24F11/81 F24F110/10 F24F110/12 |
| A | KR 2017 0035824 A (DOOYANGTECH CO LTD [KR]) 31 mars 2017 (2017-03-31) * alinéas [0021], [0037] - [0039]; figures 10,11 * | 1,7,9,10 | |
| A | KR 101 115 314 B1 (SHINWOO AIRPASS CO LTD [KR]) 5 mars 2012 (2012-03-05) * figure 3 * | 1,7,9,10 | |
| A | EP 2 345 855 A1 (MITSUBISHI ELECTRIC CORP [JP]) 20 juillet 2011 (2011-07-20) * alinéas [0017] - [0026]; figures 2,5 * | 1,7,9,10 | |
| A | EP 3 059 512 A1 (DREXEL UND WEISS ENERGIEEFFIZIENTE HAUSTECHNIKSYSTEME GMBH [AT]) 24 août 2016 (2016-08-24) * alinéas [0021] - [0028]; figure 1 * | 1,7,9,10 | DOMAINES TECHNIQUES RECHERCHES (IPC) F24F |
| A | EP 2 876 378 A1 (GEA AIR TREATMENT GMBH [DE]) 27 mai 2015 (2015-05-27) * alinéas [0011] - [0015]; figure 2 * | 1,7,9,10 | |

Le présent rapport a été établi pour toutes les revendications

| Lieu de la recherche | Date d'achèvement de la recherche | Examinateur |
|---|---|---|
| Munich | 2 septembre 2020 | Blot, Pierre-Edouard |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 17 4020

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-09-2020

| Document brevet cité au rapport de recherche | | Date de publication | Membre(s) de la famille de brevet(s) | | Date de publication |
|---|---|---|---|---|---|
| EP 0928932 | A1 | 14-07-1999 | DE | 69901352 T2 | 28-11-2002 |
| | | | DK | 0928932 T3 | 19-08-2002 |
| | | | EP | 0928932 A1 | 14-07-1999 |
| | | | NL | 1009747 C2 | 12-07-1999 |
| FR 3033627 | A1 | 16-09-2016 | AUCUN | | |
| KR 20170035824 | A | 31-03-2017 | AUCUN | | |
| KR 101115314 | B1 | 05-03-2012 | AUCUN | | |
| EP 2345855 | A1 | 20-07-2011 | EP | 2345855 A1 | 20-07-2011 |
| | | | JP | WO2010116824 A1 | 18-10-2012 |
| | | | TW | 201042218 A | 01-12-2010 |
| | | | WO | 2010116824 A1 | 14-10-2010 |
| EP 3059512 | A1 | 24-08-2016 | AT | 516753 A4 | 15-08-2016 |
| | | | EP | 3059512 A1 | 24-08-2016 |
| EP 2876378 | A1 | 27-05-2015 | DE | 102013018938 A1 | 28-05-2015 |
| | | | EP | 2876378 A1 | 27-05-2015 |
| | | | ES | 2769854 T3 | 29-06-2020 |

EPO FORM P0460

Pour tout renseignement concernant cette annexe : voir Journal Officiel de l'Office européen des brevets, No.12/82